(19) Europäisches Patentamt
European Patent Office
Office européen des brevets

(11) Numéro de publication: **0 313 436 B1**

(12) # FASCICULE DE BREVET EUROPEEN

(45) Date de publication de fascicule du brevet: **28.07.93**

(51) Int. Cl.[5]: **C08G 69/36**, C08G 69/26, C08G 69/28

(21) Numéro de dépôt: **88402554.5**

(22) Date de dépôt: **10.10.88**

(54) **Polyamides transparents, leur procédé de fabrication.**

(30) Priorité: **21.10.87 FR 8714542**

(43) Date de publication de la demande:
**26.04.89 Bulletin 89/17**

(45) Mention de la délivrance du brevet:
**28.07.93 Bulletin 93/30**

(84) Etats contractants désignés:
**AT BE CH DE FR GB IT LI NL SE**

(56) Documents cités:
**EP-A- 0 027 852**
**FR-A- 2 162 186**
**FR-A- 2 324 672**
**FR-A- 2 575 756**
**US-A- 4 207 411**

**PATENT ABSTRACTS OF JAPAN, vol. 3, no. 147 (C-66), 5 décembre 1979, page 8 C 66; & JP-A-54 123 197**

(73) Titulaire: **ELF ATOCHEM S.A.**
**4 & 8, Cours Michelet La Défense 10**
**F-92800 Puteaux(FR)**

(72) Inventeur: **Maj, Philippe**
**12bis Rue de Morsan**
**F-27300 Bernay(FR)**
Inventeur: **Blondel, Philippe**
**Côte Saint Michel Résidence Le Mont Joli no 2**
**F-27300 Bernay(FR)**
Inventeur: **Cuzin, Daniel**
**9, Allée de l'abbé Emile Bois**
**F-78560 Port Marly(FR)**

(74) Mandataire: **Foiret, Claude et al**
**ELF ATOCHEM S.A. Département Propriété Industrielle La Défense 10 - Cedex 42**
**F-92091 Paris-La-Défense (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.6/3.3.1)

## Description

La présente invention concerne un polyamide thermoplastique transparent obtenu à partir d'une diamine cycloaliphatique, d'un lactame ou de l'aminoacide correspondant, contenant au moins 7 atomes de carbone et d'acide téréphtalique ou d'un mélange d'acides isophtalique et téréphtalique contenant plus de 50 % d'acide téréphtalique.

Des polyamides transparents préparés à partir de mélange d'acides isophtalique et téréphtalique contenant plus de 50 % en moles d'acide téréphtalique sont décrits dans le brevet des Etats-Unis d'Amérique 3 847 877. Ces produits sont obtenus par polycondensation du mélange d'acides de bis (4-aminocyclohexyl)méthane et spécifiquement d'épsilon-caprolactame. Les défauts du produit obtenu sont de présenter un pouvoir d'absorption d'eau important et de se troubler après traitement à l'eau bouillante.

Des polyamides transparents préparés à partir de lactame contenant au moins 7 atomes de carbone ou de l'omega-aminoacide correspondant sont également connus du brevet français 2 324 672. Ces polyamides sont préparés à partir, en plus du lactame, de diamine cycloaliphatique et d'un mélange d'acides isophtalique et téréphtalique.

Toutefois, les polyamides décrits dans ce brevet ne contiennent au maximum que 50 % moles d'acide téréphtalique dans le mélange d'acides téréphtalique et isophtalique et de ce fait ne possèdent qu'une résistance particulièrement faible à l'essence contenant de l'alcool. Selon ce brevet les polyamides sont obtenus par polycondensation en une seule étape, et sous pression quand la réaction s'effectue en présence de lactame. Ce procédé présente l'inconvénient de conduire à des polyamides de transparence médiocre, sinon à des polyamides opaques, lorsqu'ils sont préparés à partir de mélange d'acides à plus de 50 % en moles d'acides téréphtalique.

Selon la présente invention, grâce au procédé consistant à faire réagir les lactames, ou les omega-aminoacides, contenant au moins 7 atomes de carbone avec l'acide téréphtalique ou un mélange d'acides téréphtalique et isophtalique contenant plus de 50 % en moles d'acide téréphtalique, est réalisé un polyamide transparent nouveau caractérisé par les enchainements suivants après réaction du produit obtenu avec une diamine cycloaliphatique

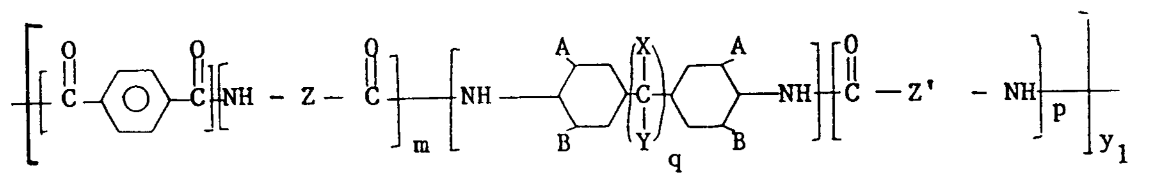

et

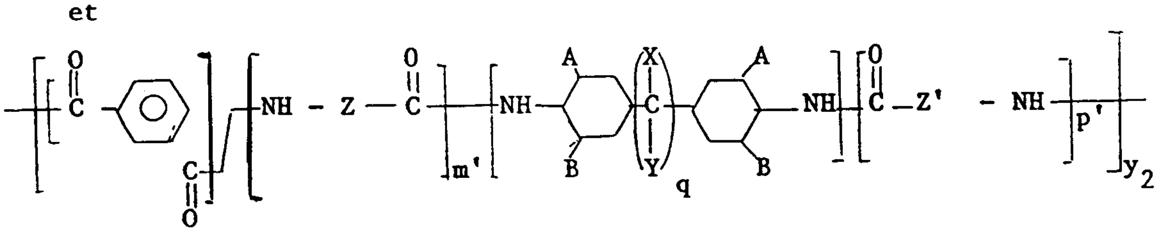

Sachant que

$y_1 + y_2$ est compris entre 10 et 200 avec

$$\frac{y_1}{y_1 + y_2} > 0{,}5$$

m, p, m′, p′ sont des nombres entiers égaux ou supérieurs à 0 avec la condition :

$$\left[\frac{y_1}{y_1 + y_2}(m + p)\right] + \left[\frac{y_2}{y_1 + y_2}(m' + p')\right]$$

compris entre 0,5 et 10 prise statistiquement sur la macromolécule

Z et Z′ identiques ou différents sont soit un segment polyméthylène $-(CH_2)_n-$ où

n est un nombre entier égal ou supérieur à 6 et de préférence compris entre 8 et 11, soit une séquence contenant une fonction amide résultant de la condensation d'une diamine aliphatique contenant au moins 6 atomes de carbone entre les fonctions amines et d'un acide dicarboxylique aliphatique contenant au moins 4, et de préférence au moins 6, atomes de carbone entre les fonctions acides.

A et B identiques ou différents représentant l'hydrogène, le radical méthyle, le radical éthyle ou le radical isopropyle

X et Y identiques ou différents représentant l'hydrogène ou le radical méthyle

q étant un nombre entier compris entre 0 et 6

Le reste de l'acide téréphtalique ou les restes des acides téréphtalique et isophtalique, quand il s'agit d'un mélange, se trouvent, dans la macromolécule, de préférence en quantité approximativement stoechiométrique par rapport au reste de la diamine cycloaliphatique pratiquement de l'ordre de 1/0.90 à 1/1.10. Par ailleurs dans cette même macromolécule les segments aliphatiques aminés constitués des résidus du lactame ou de l'aminoacide correspondant et/ou des sels aliphatiques ou des mélanges équimolaires de diamines et diacides représentent en poids 20 à 60 % et de préférence 30 à 50 % de la macromolécule.

Un tel produit présente l'intérêt de posséder un faible pouvoir d'absorption d'eau. En outre ce produit présente une absorption moindre des solvants chlorés et surtout de l'essence contenant de l'alcool que les produits actuellement connus. Il est par ailleurs constaté que ce produit possède une température de transition vitesse (Tg) supérieure à celle des produits contenant moins de 50 % d'acide téréphtalique.

Le polyamide thermoplastique transparent selon l'invention est préparé en deux étapes. Dans la première étape on prépare un oligomère en faisant réagir le diacide, acide téréphtalique ou son mélange à plus de 50 % en moles d'acide téréphtalique et d'acide isophtalique, avec un lactame possédant au moins 7 atomes de carbone dans sa molécule, ou, l'oméga-aminoacide correspondant, ou encore, la combinaison équimoléculaire d'un ou plusieurs composés aliphatiques diamines avec un ou plusieurs acides dicarboxyliques possédant respectivement au moins 6 et 4 atomes de carbone entre les fonctions amines et acides carboxyliques de leurs molécules. Dans la seconde étape on fait réagir l'oligomère diacide formé avec une diamine cycloaliphatique en quantité de préférence approximativement stoechiométrique.

Les lactames ou omega-aminoacides, utilisés dans le procédé, possèdent au moins 7 atomes de carbone mais de préférence 9 à 12 atomes de carbone. Parmi eux on peut citer à titre d'exemple le dodécalactame, l'undécanolactame, le lauryllactame, l'acide 10-amino-décanoïque, l'acide 11 amino-undécanoïque, l'acide 12-aminododécanoïque.

La combinaison équimoléculaire de composé aliphatique diamine et d'acide dicarboxylique peut se présenter sous la simple forme de mélange. Elle peut également se présenter sous forme de sel après réaction en solution des composants. Dans cette combinaison peut, par exemple, être mis en oeuvre l'hexaméthylène diamine, la 2,2,4 et/ou 2,4,4-triméthylhexaméthylène diamine, la dodécaméthylène diamine, l'acide adipique, l'acide azélaïque, l'acide sébacique, l'acide 1,12-dodécanedioïque.

Les diamines cycloaliphatiques utilisées répondent à la formule générale

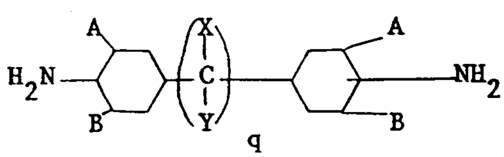

dans laquelle

A et B, identiques ou différents, représentent l'hydrogène, le radical méthyle, le radical éthyle ou le radical isopropyle

X et Y, identiques ou différents, représentent l'hydrogène ou le radical méthyle

q est un nombre entier compris entre 0 et 6.

Parmi ces diamines on peut citer comme exemple : le bis(3-méthyl 4-aminocyclohexyl)méthane, le 2,2-bis(4-aminocyclohexyl)propane, le bis(3,méthyl 4-amino 5-éthylcyclohexyl)méthane, le 1,2-bis(4-aminocyclohexyl)éthane, le 2,2′bis(3-méthyl 4-aminocyclohexyl)propane, le bis(4-aminocyclohexyl)méthane. Les diamines cycloaliphatiques peuvent être utilisées sous forme de mélange et en particulier sous forme de mélange d'isomères.

Dans la première étape de réaction on prépare l'oligomère diacide par condensation de l'acide téréphtalique, ou de son mélange avec l'acide isophtalique, avec le composé aminé. De façon habituelle la réaction s'effectue en réacteur sous atmosphère inerte et/ou sous pression en maintenant les réactifs, de

préférence sous agitation, à une température comprise entre 200 et 320 ° C et de préférence comprise entre 260 et 310 ° C. La réaction s'effectue généralement 1 à 5 heures sous pression atmosphérique ou sous pression maximum de 30 bars. La quantité de composé aminé mise en oeuvre est comprise entre 0,5 et 10 moles, et mieux entre 0,8 et 2 moles, par mole d'acide téréphtalique ou par mole de mélange d'acides téréphtalique-isophtalique.

Dans la seconde étape on ajoute, sous pression atmosphérique, à l'oligomère diacide formé la diamine cycloaliphatique que l'on fait réagir à une température comprise entre 200 et 350 ° C, et mieux entre 250 et 310 ° C. La réaction s'effectue généralement en atmosphère inerte en 1 à 6 heures sous vide et/ou pression atmosphérique et/ou sous pression maximum de 20 bars. Les rapports molaires mis en oeuvre d'oligomère diacide/diamine cycloaliphatique sont compris entre 1/0,90 et 1/1,10.

Dans cette deuxième étape peuvent être avantageusement utilisés les catalyseurs connus de polyamidification tels que les acides phosphorique et hypophosphoreux. Dans cette étape il n'est également pas exclu d'ajouter un complément d'acide téréphtalique et/ou d'acide isophtalique dans la mesure où la quantité d'acide téréphtalique dans le polymère par rapport à la somme des acides téréphtalique et isophtalique est supérieure à 50 %.

Il est également possible dans cette seconde étape d'ajouter au milieu réactionnel les additifs habituels des polyamides tels que : stabilisants à la lumière et/ou à la chaleur, colorants, azurants optiques, plastifiants, agents de démoulage, agents d'ignifugation et autres.

Les polyamides selon la présente invention, peuvent également être mélangés avec d'autres matériaux thermoplastiques dont en particulier, d'autres homo ou copolyamides. Ces constituants sont ajoutés dans une quantité de façon à ne former que 0 à 50 % en masse de l'alliage obtenu. Le mélange peut par exemple être fait par malaxage à l'état fondu d'un mélange de granulés. On peut par exemple utiliser comme polyamide supplémentaire le poly(lauryllactame), poly(hexaméthylène adipamide) ou le poly-(caprolactame -co- lauryllactame).

Les exemples suivants illustrent l'invention sans toutefois la limiter. Dans ces exemples :

- la viscosité inhérente des polyamides est déterminée à 20 ° C à partir d'une solution de 0,5 g de produit dans 100 g de métacrésol. Elle est exprimée en décilitre par gramme ($dl.g^{-1}$).
- la température de transition vitreuse (Tg) est déterminée par analyse thermique différentielle (Appareil Perkin Elmer DSC-4) à une vitesse de chauffe de 20 ° C/min
- les absorptions de solvant chloré et d'essence contenant 3 % de méthanol et 2 % de tertiobutanol (Essence M3B2) sont mesurées par la variation de masse de cinq éprouvettes d'épaisseur 2 mm et de masse environ 1 g. immergées dans les liquides
- la masse molaire moyenne $\overline{Mn}$ est évaluée d'après le dosage potentiométrique des groupements acides et amines résiduels
- l'opacité, ou rapport de contraste, ainsi que le pourcentage de lumière transmise ou réfléchie à la longueur d'onde de 460 mm, sont mesurés sur une machine Spectro Sensor II de Applied Color System Inc. suivant la méthode préconisée par le constructeur
- la stabilité à l'eau bouillante correspond au nombre de jours d'immersion de plaques au bout desquels elles deviennent opaques.

## EXEMPLE 1

Dans un autoclave en acier inoxydable de 90 l. de capacité, muni d'une agitation à ancre, d'un système de chauffage à double enveloppe à circulation d'huile, d'une entrée et d'une sortie de gaz inerte d'une vanne de détente, d'une vanne de fond pour recueillir le produit de la réaction, on introduit 21,7 kg de lauryllactame solide, 8,7 kg d'acide téréphtalique et 3,6 kg d'eau. Après avoir purgé le réacteur par des cycles répétés de pression et dépression de gaz inerte, le mélange est porté à 300 ° C en 100 min. sous agitation à 53 $t.min^{-1}$, et maintenu 75 min. à cette température. Les vannes du réacteur étant fermées, il s'établit une pression autogène de 30 bars. On diminue alors progressivement la pression en ouvrant légèrement la vanne de détente, jusqu'à pression atmosphérique, en 60 min. et on poursuit la réaction pendant encore 15 min. sous balayage d'azote. On arrête l'agitation et on laisse couler par la vanne de fond le produit fondu dans un bac où il se solidifie. On recueille 28,5 kg d'oligomère de $\overline{Mn}$ = 644 contenant 0,14 % poids de lauryllactame résiduel.

40,0 g. l'oligomère précédent et 13,7 g. de bis(amino-4-cyclohexyl)méthane sont introduits dans un réacteur en verre de 100 $cm^3$ de volume utile, muni d'un agitateur à ancre en verre, d'une tubulure pour l'admission d'azote et d'un refrigérant. Après avoir purgé le réacteur à l'azote, il est plongé dans un bain d'huile à 240 ° C. Quand le mélange de réactifs est fondu, l'agitation est mise en route et on élève la température à 280 ° C en 40 min. On poursuit la réaction une heure à cette température, puis on arrête

l'agitation, et le chauffage en sortant le réacteur du bain thermostatique. On obtient, après refroidissement 48 g. d'un polymère transparent de Tg = 111,4 ° C, et de viscosité inhérente 1,11 dl.g$^{-1}$.

EXEMPLE 2

53,25 g. de l'oligomère de l'exemple 1 sont mis en réaction avec 20,80 g. de bis(3-méthyl 4-aminocyclohexyl)méthane. Les réactifs sont maintenus sous agitation et atmosphère inerte 1 heure entre 240 et 280 ° C puis 40 minutes à 280 ° C et 20 minutes à 290 ° C.

On obtient après refroidissement 65 g. d'un polyamide transparent de Tg = 119 ° C et de viscosité inhérente de 0,90 dl.g$^{-1}$.

EXEMPLE 3

45,7 g. de l'oligomère de l'exemple 1, 21,1 g. de bis(4-aminocyclohexyl)méthane, 1,5 g. d'acide téréphtalique et 2,5 g. d'acide isophtalique sont mis en réaction dans un réacteur en verre identique à celui de l'exemple 1. Les réactifs sont maintenus sous agitation et atmosphère inerte 10 minutes entre 200 et 240 ° C puis 30 minutes entre 240 et 280 ° C, puis 30 minutes entre 280 et 300 ° C et enfin 15 minutes à 300 ° C.

Après refroidissement on recueille 55 g. d'un polyamide transparent de Tg = 128 ° C et de viscosité inhérente de 1,06 dl.g$^{-1}$.

EXEMPLE 4

12,8 g. de diamino-1,6-hexane, 16,1 g. d'acide adipique et 16,6 g. d'acide téréphtalique sont mis à réagir dans un réacteur de polycondensation en verre de 100 cm$^3$ muni d'un agitateur à ancre en verre, d'une tubulure pour l'admission d'azote et d'un réfrigérant.

Le réacteur balayé par un courant d'azote est placé dans un bain de 240 ° C. L'agitation est mise en route après 22 minutes et la température est alors portée à 260 ° C en 5 minutes, maintenue à cette valeur 20 minutes puis augmentée jusqu'à 280 ° C en 6 minutes. Après 25 minutes de réaction à cette température le produit est laissé à refroidir.

L'oligomère diacide ainsi obtenu à une $\overline{Mn}$ de 412.

32,36 g. de l'oligomère précédent sont mis à réagir avec 19,28 g. de bis(3-méthyl 4-aminocyclohexyl)-méthane. Les réactifs sont maintenus sous agitation et atmosphère inerte 60 minutes entre 240 et 300 ° C puis 70 minutes à 300 ° C.

On recueille un polyamide transparent de Tg = 153 ° C et de $\overline{Mn}$ = 10600.

EXEMPLE 5

5,8 kg de l'oligomère de l'exemple 1, 4 kg de bis(3-méthyl 4-aminocyclohexyl)méthane, 760 g. d'acide téréphtalique, 380 g. d'acide isophtalique et 8,5 cm$^3$ d'acide phosphorique pur sont placés dans le réacteur en acier inoxydable, semblable à celui décrit dans l'exemple 1, mais de capacité 40 l. et agité à 30 t/min.

Après avoir purgé le réacteur avec un gaz neutre, le contenu est chauffé, sous agitation à 30 t/min., jusqu'à une température de 200 ° C en 75 minutes.

La température est ensuite élevée progressivement à 255 ° C en 3 heures.

On effectue ensuite une détente progressive de 13 bars à pression atmosphérique en 50 minutes. La température est montée simultanément à 281 ° C. La polycondensation est poursuivie 20 minutes sous balayage d'azote, la température passant à 287 ° C. Après 50 minutes de repos le produit est extrudé et granulé.

Les propriétés du produit obtenu sont données dans le tableau suivant.

EXEMPLE 6

Dans l'autoclave de polycondensation de l'exemple 5 on place 9,2 kg de lauryllactame, 4,35 kg d'acide téréphtalique et 1,45 kg d'acide isophtalique. Les réactifs sont portés de 20 à 310 ° C en une heure sous agitation et atmosphère neutre. Une pression autogène de 1,5 bar est alors atteinte. Ces conditions de réaction sont maintenues durant 90 minutes. On effectue alors une détente jusqu'à pression atmosphérique en 5 minutes. La réaction est poursuivie 15 minutes sous balayage d'azote et l'on recueille par la vanne de fond environ 13 kg d'un oligomère de $\overline{Mn}$ 459.

On fait réagir, dans un autoclave en acier inoxydable de capacité 40 l. semblable à celui de l'exemple 5, 7,693 kg de l'oligomère précédent avec 230 g. d'acide téréphtalique, 77 g. d'acide isophtalique, 4,66 kg de bis(3-méthyl 4-aminocyclohexyl)méthane et 24 g. d'une solution aqueuse d'acide hypophosphoreux à 50 %.

Les réactifs sont maintenus sous agitation et atmosphère inerte.

La température est élevée progresssivement jusqu'à 270 °C en 145 minutes et maintenue à cette valeur durant 30 minutes. On effectue ensuite une détente en 105 minutes de 19,5 à 0,5 bars, la température augmentant simultanément jusqu'à 300 °C. L'agitation est alors arrêtée et le produit recueilli par la vanne de fond et granulé.

Les propriétés du produit obtenu sont données dans le tableau suivant.

EXEMPLE 7

Dans l'autoclave de polycondensation utilisé pour l'exemple 5 on introduit 4,735 kg de lauryllactame, 2,99 kg d'acide téréphtalique et 0,23 kg d'acide isophtalique. Après avoir purgé le réacteur à l'azote, son contenu est chauffé sous agitation jusqu'à 310 °C en 90 minutes et maintenu 90 minutes à cette température. L'oligomère diacide contenu dans le réacteur est alors refroidi à 280 °C, la pression interne s'établissant à 1,5 bars. On raccorde sur la vanne de détente un récipient de 10 l. en acier inoxydable qui contient 4,78 kg de bis(3-méthyl 4-aminocyclohexyl)méthane liquide à température ambiante et 24 g. d'une solution aqueuse à 50 % d'acide hypophosphoreux. Le récipient est préssurisé à 8 bars par de l'azote. La diamine et l'acide hypophosphoreux sont introduits par ouverture de la vanne de détente de l'autoclave. La vanne est alors refermée et le système d'introduction démonté. La température de milieu réactionnel après une chute à 240 °C lors de l'introduction de la diamine est ramenée à 265 °C en 35 minutes. La pression dans l'autoclave s'établit alors à 19 bars. Cette pression est maintenue durant 90 minutes puis ramenée à pression atmosphérique en 120 minutes avec augmentation simultanée de la température du milieu réactionnel jusqu'à 300 °C. L'agitation est stoppée et le polymère recueilli après 10 minutes.

Les propriétés du produit transparent obtenu sont données dans le tableau suivant.

EXEMPLE 8

On introduit dans un autoclave semblable à celui de l'exemple 5, 4,735 kg de lauryllactame, 5,155 kg d'acide téréphtalique, 0,165 kg d'acide isophtalique et 0,7 kg d'eau. Les réactifs sont maintenus sous agitation et atmosphère inerte. On chauffe les réactifs, réacteur fermé, jusqu'à 265 °C en 105 minutes. La pression résultante de 19 bars est maintenue 90 minutes puis réduite à pression atmosphérique en 90 minutes avec augmentation simultanée de la température à 285 °C. On introduit alors par les mêmes moyens que dans l'exemple 7, 5,01 kg de bis(3-méthyl 4-aminocyclohexyl)méthane liquide à 25 °C et 12 g. d'acide phosphorique pur. Le mélange réactionnel est réchauffé à 270 °C en 40 minutes et la pression de 20 bars est maintenue 90 minutes puis réduite à 110 minutes à pression atmosphérique avec augmentation simultanée de la température jusqu'à 294 °C. Le produit est ensuite extrudé et granulé.

Les propriétés du polymère obtenu sont données dans le tableau suivant.

EXEMPLE 9 comparatif

Dans un autoclave similaire à celui de l'exemple 5 on introduit 4,735 kg de lauryllactame, 0,166 kg d'acide téréphtalique, 3,154 kg d'acide isophtalique, 5,006 kg de bis(3-méthyl 4-aminocyclohexyl) méthane et 24 g. de solution aqueuse d'acide hypophosphoreux à 50 %. Les réactifs maintenus sous agitation et sous atmosphère inerte sont chauffés, réacteur fermé, jusqu'à une température de 255 °C et une pression de 18,5 bars en 135 minutes. Cette pression et maintenue 180 minutes la température augmentant progressivement jusqu'à 270 °C du fait de la condensation de l'eau dans les parties froides de l'appareil. La pression est alors réduite, jusqu'à pression atmosphérique en 120 minutes avec augmentation simultanée de la température jusqu'à 300 °C. Le produit est maintenu 10 minutes sous agitation et balayage d'azote puis extrudé et granulé.

Les propriétés de ce polymère transparent sont données dans le tableau suivant.

EXEMPLE 10 comparatif

Cet exemple illustre la préparation en une seule étape d'un polymère de composition selon l'invention.

Dans un autoclave on polycondense selon la méthode de l'exemple 9, 4,735 kg de lauryllactame, 3,154 kg d'acide téréphtalique, 0,166 kg d'acide isophtalique, 5,006 kg de bis (3-méthyl 4-aminocyclohexyl) méthane et 24 g. de solution aqueuse à 50 % d'acide hypophosphoreux.

Le polymère obtenu a un aspect laiteux et n'est pas transparent.

Ses propriétés sont données dans le tableau suivant.

| N°Exemple | Rapport molaire L12/TA/IA/BMACM | $dl.g^{-1}$ | $\overline{Mn}$ | Tg. °C | % absorption Essence M3B2 8 jours | % absorption dichlorométhane 8 jours | opacité | transmission à 460 mm % | Stabilité eau bouillante en jours |
|---|---|---|---|---|---|---|---|---|---|
| 5 | 1,36/0,86/0,14/1,05 | 1,30 | 17020 | 159,7 | 23,2 | 53,0 | 13,0 | 83,7 | 3 |
| 6 | 1,20/0,75/0,25/1,05 | 1,17 | 11250 | 157,6 | 25,9 | 53,1 | 14,0 | 82,1 | 6 |
| 7 | 1,24/0,93/0,07/1,05 | 1,05 | 9900 | 156,8 | 21,3 | 53,8 | 14,9 | 80,5 | >6 |
| 8 | 1,20/0,95/0,05/1,05 | 1,04 | 10200 | 160,4 | 20,0 | 55,4 | 14,8 | 81,2 | >6 |
| N°Exemple comparatif | | | | | | | | | |
| 9 | 1,20/0,05/0 95/1,05 | 1,00 | 11330 | 151,2 | 31,8 | 67,3 | 14,0 | 83,2 | 2 |
| 10 | 1,20/0,95/0 05/1,05 | 0,92 | 9280 | 156,4 | 23,9 | 53,1 | 18,0 | 69,7 | 2 |

L12 = lactame 12
TA = acide téréphtalique
IA = acide isophtalique
BMACM = bis(3-méthyl 4-aminocyclohexyl)méthane

## Revendications

1. Polyamides transparents caractérisés par les enchainements

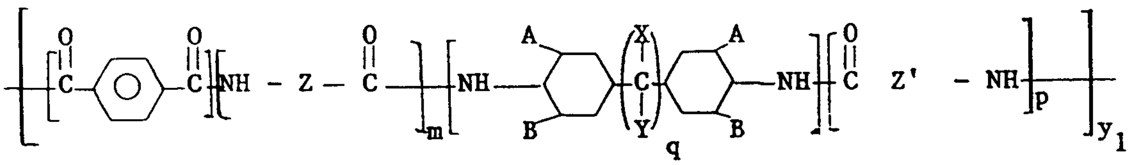

et

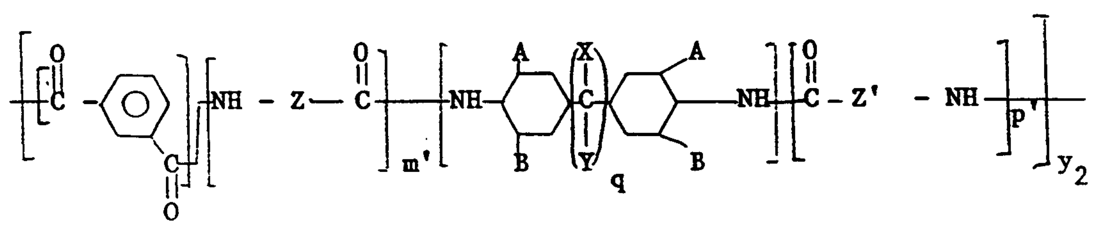

Sachant que
$y_1 + y_2$ est compris entre 10 et 200 avec

$$\frac{y_1}{y_1 + y_2} > 0{,}5$$

m, p, m', p' sont des nombres entiers égaux ou supérieurs à 0 avec la condition :

$$\left[\frac{y_1}{y_1 + y_2} (m + p)\right] + \left[\frac{y_2}{y_1 + y_2} (m' + p')\right]$$

compris entre 0,5 et 10 prise statistiquement sur la macromolécule

Z et Z' identiques ou différents sont soit un segment polyméthylène $-(CH_2)_n-$ où n est un nombre entier égal ou supérieur à 6 et de préférence compris entre 8 et 11, soit une séquence contenant une fonction amide résultant de la condensation d'une diamine aliphatique contenant au moins 6 atomes de carbone entre les fonctions amines et d'un acide dicarboxylique aliphatique contenant au moins 4, et de préférence au moins 6, atomes de carbone entre les fonctions acides.

A et B identiques ou différents représentant l'hydrogène, le radical méthyle, le radical éthyle ou le radical isopropyle

X et Y identiques ou différents représentant l'hydrogène ou le radical méthyle

q étant un nombre entier compris entre 0 et 6

2. Polyamides selon la revendication 1 caractérisés en ce que le rapport du reste de l'acide téréphtalique ou les restes du mélange des acides téréphtalique et isophtalique au reste de la diamine cycloaliphatique se trouve compris entre 1/0,90 et 1/1,10.

3. Polyamides selon l'une des revendications 1 ou 2 caractérisés en ce que les segments aliphatiques représentent en poids 20 à 60 % de la macromolécule.

4. Procédé de fabrication de polyamide transparent selon la revendication 1 par réaction avec une diamine cycloaliphatique de formule :

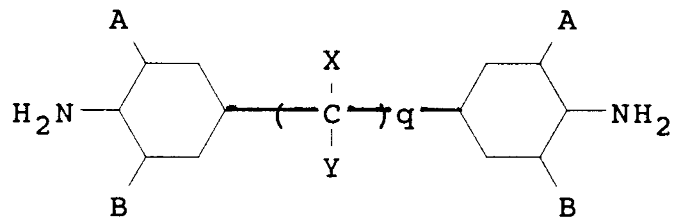

dans laquelle

A et B, identiques ou différents, représentent l'hydrogène, le radical méthyle, le radical éthyle ou le radical isopropyle

X et Y, identiques ou différents, représentent l'hydrogène ou le radical méthyle

q est un nombre entier compris entre 0 et 6

du produit de la réaction d'acide téréphtalique ou de mélange d'acides téréphtalique et isophtalique avec un lactame, un oméga-aminoacide ou la combinaison d'un ou plusieurs diamines aliphatiques et d'un ou plusieurs acides dicarboxyliques, caractérisé en ce que dans une première étape on fait réagir l'acide téréphtalique ou un mélange d'acides téréphtalique et isophtalique contenant plus de 50 % en moles d'acide téréphtalique avec un lactame possédant au moins 7 atomes de carbone, ou un oméga-amino-acide ou encore la combinaison équimoléculaire d'une ou plusieurs diamines possédant au moins 6 atomes de carbone entre les fonctions amines avec un ou plusieurs acides dicarboxyliques possédant au moins 4 atomes de carbone entre les fonctions acides carboxyliques et dans une seconde étape on fait réagir l'oligomère diacide formé avec la diamine cycloaliphatique.

5. Procédé selon la revendication 4 caractérisé en ce que dans la première étape la quantité de lactame, aminoacide, ou mélange de diamine et de diacide mis en oeuvre est compris entre 0,5 et 10 moles par mole d'acide téréphtalique ou de mélange d'acides.

6. Procédé selon l'une des revendications 4 ou 5 caractérisé en ce que les rapports molaires d'oligomère diacide/diamine cycloaliphatique mis en oeuvre dans la seconde étape sont compris entre 1/0,90 et 1/1,10.

**Claims**

1. Transparent polyamides, characterised by the linkages

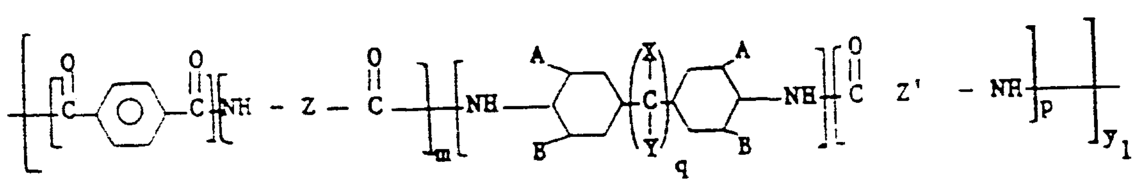

and

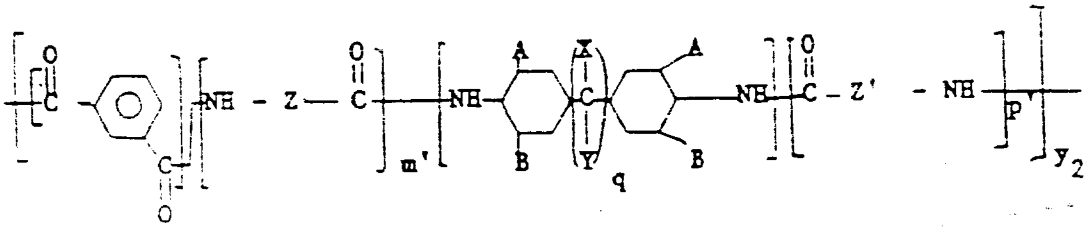

Knowing that

$y_1 + y_2$ is between 10 and 200 with

$$\frac{y_1}{y_1 + y_2} > 0{,}5$$

m, p, m', p' are integers equal to or greater than 0 with the condition:

$$\left[\frac{y_1}{y_1 + y_2}(m + p)\right] + \left[\frac{y_2}{y_1 + y_2}(m' + p')\right]$$

between 0.5 and 10 taken statistically on the macromolecule

Z and Z', which are identical or different, are either a polymethylene segment $(CH_2)_n$, where n is an integer equal to or greater than 6 and preferably between 8 and 11, or a sequence containing an amide functional group resulting from the condensation of an aliphatic diamine containing at least 6 carbon atoms between the amine functional groups and an aliphatic dicarboxylic acid containing at least 4, and preferably at least 6, carbon atoms between the acid functional groups

A and B, which are identical or different, represent hydrogen, a methyl radical, an ethyl radical or an isopropyl radical

X and Y, which are identical or different, represent hydrogen or a methyl radical

q being an integer between 0 and 6.

**2.** Polyamides according to Claim 1, characterised in that the ratio of the terephthalic acid residue or the residues of the mixture of terephthalic and isophthalic acids to the cycloaliphatic diamine residue is between 1/0.90 and 1/1.10.

**3.** Polyamides according to either of Claims 1 or 2, characterised in that the aliphatic segments represent 20 to 60 % by weight of the macromolecule.

**4.** Process for the manufacture of transparent polyamide according to Claim (lacuna) by reacting with a cycloaliphatic diamine of formula:

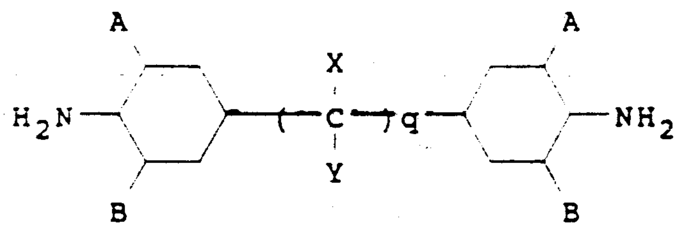

in which

A and B, which are identical or different, represent hydrogen, a methyl radical, an ethyl radical or an isopropyl radical

X and Y, which are identical or different, represent hydrogen or a methyl radical

q is an integer beteen 0 and 6

the product of the reaction of terephthalic acid or of a mixture of terephthalic and isophthalic acids with a lactam, an ω-amino acid or the combination of one or more aliphatic diamines and one or more dicarboxylic acids, characterised in that, in a first stage, terephthalic acid or a mixture of terephthalic and isophthalic acids containing more than 50 mol % of terephthalic acid is reacted with a lactam having at least 7 carbon atoms, or an ω-amino acid or also the equimolecular combination of one or more diamines, having at least 6 carbon atoms between the amine functional groups, with one or more dicarboxylic acids, having at least 4 carbon atoms between the carboxylic acid functional groups, and, in a second stage, the diacid oligomer formed is reacted with the cycloaliphatic diamine.

5. Process according to Claim 4, characterised in that, in the first stage, the quantity of lactam, amino acid or mixture of diamine and diacid used is between 0.5 and 10 mol per mole of terephthalic acid or mixture of acids.

6. Process according to either of Claims 4 or 5, characterised in that the diacid oligomer/cycloaliphatic diamine molar ratios used in the second stage are between 1/0.90 and 1/1.10.

**Patentansprüche**

1. Transparente Polyamide, gekennzeichnet durch die Kettenstruktur

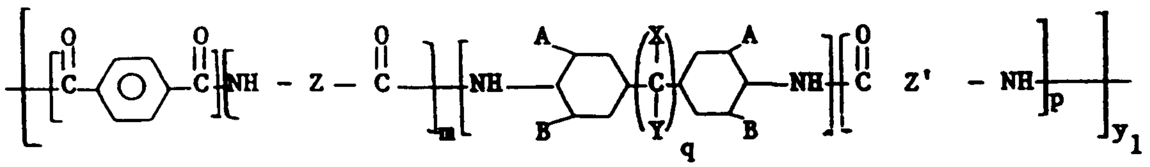

und

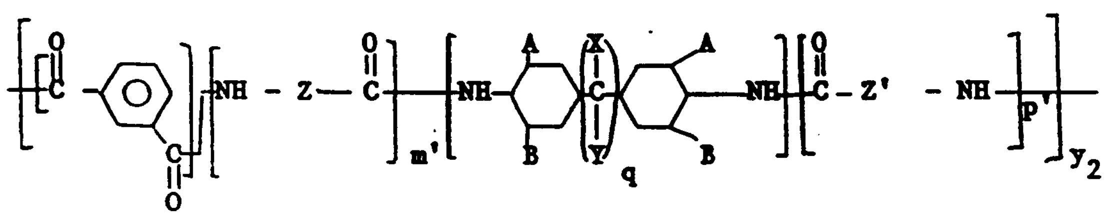

wissend, daß
$y_1 + y_2$, mit $y_1/(y_1 + y_2)$ 0,5, zwischen 10 und 100 liegt,
m, p, m', p' ganze Zahlen gleich oder größer 0 sind, mit der Bedingung, daß

$$\left[\frac{y_1}{y_1 + y_2} (m + p)\right] + \left[\frac{y_2}{y_1 + y_2} (m' + p')\right]$$

statistisch für das Makromolekül zwischen 0,5 und 10 liegt,
Z und Z', gleich oder verschieden, bestehen entweder aus einem Polymethylenbereich $-(CH)_n-$, wobei n eine ganze Zahl gleich oder größer 6 ist und bevorzugt zwischen 8 und 11 liegt, oder aus einer eine Amidfunktion enthaltenden Sequenz, die aus der Kondensation eines aliphatischen Diamins mit mindestens 6 Kohlenstoffatomen zwischen den Aminfunktionen und einer aliphatischen Dicarbonsäure entsteht, die mindestens 4 und bevorzugt 6 Kohlenstoffatome zwischen den Säurefunktionen besitzt,
A und B, gleich oder verschieden, stehen für Wasserstoff, die Methyl-, Ethyl- oder Isopropylgruppe,
X und Y, gleich oder verschieden, stehen für Wasser stoff oder die Methylgruppe,
q ist eine zwischen 0 und 6 liegende ganze Zahl.

2. Polyamide gemäß Anspruch 1, dadurch gekennzeichnet, daß das Verhältnis des Terephthalsäurerestes oder der Reste von Mischungen der Terephthal- oder Isophthalsäure zum Rest des cycloaliphatischen Diamins zwischen 1/0,90 und 1/1,10 liegt.

3. Polyamide gemäß einem der Ansprüche 1 oder 2, dadurch gekennzeichnet, daß die aliphatischen Segmente des Makromoleküls 20 bis 60 Gew.% ausmachen.

4. Verfahren zur Herstellung von transparentem Polyamid gemäß Anspruch 1 durch Reaktion eines cycloaliphatischen Diamins der Formel:

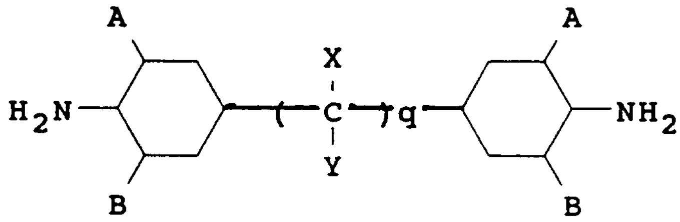

in der
A und B, gleich oder verschieden, für Wasserstoff, die Methyl-, Ethyl- oder Isopropylgruppe stehen, X und Y, gleich oder verschieden, für Wasserstoff oder die Methylgruppe stehen,
q eine ganze Zahl zwischen 0 und 6 ist,
mit dem Reaktionsprodukt von Terephthalsäure oder einer Mischung von Terephthal- und Isophthalsäure mit einem Lactam, einer omega-Aminosäure oder einer Kombination eines oder mehrerer aliphatischen Diamine und einer oder mehreren Dicarbonsäuren, dadurch gekennzeichnet, daß man in der ersten Stufe Terephthalsäure oder ein mehr als 50 Mol.% Terephthalsäure enthaltendes Gemisch aus Terephthalsäure und Isophthalsäure mit einem Lactam, das mindestens 7 Kohlenstoffatome trägt, oder mit einer omega-Aminosäure oder einer äquimolaren Kombination von einem oder mehreren Diaminen mit mindestens 6 Kohlenstoffatomen zwischen den Aminfunktionen und einer oder mehreren Dicarbonsäuren, die mindestens 4 Kohlenstoffatome zwischen den Carboxylfunktionen tragen, umsetzt und in einer zweiten Stufe die gebildete, oligomere Dicarbonsäure mit dem cycloaliphatischen Diamin umsetzt.

**5.** Verfahren gemäß Anspruch 4, dadurch gekennzeichnet, daß in der ersten Stufe die eingesetzte Menge des Lactams, der Aminosäure oder der Mischung aus Diamin und Dicarbonsäure zwischen 0,5 und 10 Mol pro Mol Terephthalsäure oder der Säuremischung liegt.

**6.** Verfahren gemäß einem der Ansprüche 4 oder 5 dadurch gekennzeichnet, daß die in der zweiten Stufe eingesetzten Molverhältnisse zwischen oligomerer Dicarbonsäure und cycloaliphatischem Diamin zwischen 1/0,90 und 1/1,10 liegen.